# FASCICULE DE BREVET EUROPEEN

(11) **EP 0 953 121 B1**
(45) Date de publication et mention de la délivrance du brevet: **29.12.2004**
(21) Numéro de dépôt: 98925768.8
(22) Date de dépôt: 22.05.1998
(51) Int. Cl.: F16D 3/84, B25B 27/28, F16J 3/04

(54) **GAINE SOUPLE UNIVERSELLE A SOUFFLET POUR JOINT ARTICULE ET OUTILLAGES DE MISE EN PLACE DE CETTE GAINE**
UNIVERSALFALTENBALG FÜR DREHGELENKKUPPLUNG UND WERKZEUG ZUM EINSETZEN VON DIESEM BALG
UNIVERSAL FLEXIBLE SHEATH WITH BELLOW FOR ARTICULATED JOINT AND EQUIPMENT FOR FIXING SAME

(30) Priorité: 19.11.1997 FR 9714747
(43) Date de publication de la demande: 03.11.1999
(73) Titulaire: Yamajany (S.A.R.L.), 13008 Marseille (FR)
(72) Inventeur: MERSCH, Patrick, F-13008 Marseille (FR)
(74) Mandataire: Roman, Alphonse
(86) Numéro de dépôt international: PCT/FR1998/001027
(87) Numéro de publication internationale: WO 1999/025985

(56) Documents cités:
- EP-A- 0 425 864
- EP-A- 0 669 476
- EP-A- 0 669 478
- EP-A- 0 794 347
- WO-A-96/23143
- DE-A- 19 510 598
- FR-A- 2 717 542
- FR-A- 2 727 644
- GB-A- 1 218 729
- US-A- 3 041 885
- US-A- 3 566 928
- US-A- 4 721 175
- US-A- 5 006 376
- US-A- 5 015 515
- US-A- 5 353 489
- US-A- 5 419 030
- US-A- 5 645 286

## Description

La présente invention a pour objet une gaine souple universelle à soufflet pour joint articulé.

Elle concerne le domaine industriel et commercial de la fabrication et de la diffusion d'équipements pour ateliers de réparation et de maintenance des véhicules automobiles. La gaine est destinée à la protection des joints lubrifiés de type cardan, homocinétiques, tripodes, à billes, à rotule ou similaires utilisés pour transmettre un mouvement à des organes mobiles. Le dispositif peut être adapté à tous les types de gaines de protection, et en particulier à celles utilisées pour les organes mécaniques de transmission ou les crémaillères de direction.

Les gaines protectrices pour joints articulés servent, d'une part, à protéger les articulations contre les corps étrangers, les chocs et autres éléments extérieurs et, d'autre part, à contenir de manière étanche la masse lubrifiante dont le mécanisme a besoin pour durer.

Elles sont constitués d'un élément tubulaire en caoutchouc ou élastomère souple, habituellement moulé en une seule pièce, formé d'une partie centrale tronconique avec ondulations permettant la flexion et l'extension axiale du corps, et de deux extrémités comportant l'une et l'autre des zones de fixations cylindriques avec un diamètre intérieur permettant leur raccordement sur les éléments correspondants du joint articulé, et incorporant en général des gorges formant des sièges destinés à recevoir les dispositifs de serrage assurant l'étanchéité de l'ensemble.

La plupart des gaines sont spécifiques à chaque application, notamment pour l'équipement des véhicules neufs. Pour réduire le nombre de références sur le marché du remplacement, certains modèles sont "universels", c'est-à-dire peuvent être montés sur une large gamme de joints articulés de diamètres et longueurs différents. Cette "universalité" est obtenue en particulier au moyen de zones de fixations multiples en gradins, comme on peut le constater par exemple dans le brevet N° EP 0 339 387, qui concerne un soufflet de protection pour joints articulés de transmission mécanique, comportant à chaque extrémité plusieurs zones de fixation de diamètres différents.

Les gaines sont soumises à des déformations constantes, en longueur et en inclinaison, tout en étant soumises à des rotations de vitesse très variable. Sous l'effet de la force centrifuge et des déformations de la paroi de la gaine, la matière lubrifiante a tendance à s'écarter des parties du joint proches de l'axe de rotation et des mécanismes d'articulation, ce qui, en cas de fuite ou de mauvais remplissage, peut compromettre sérieusement le fonctionnement ou la durée du dispositif.

Le dispositif selon la présente invention a pour objectif de remédier à cet état de choses. Il permet en effet de réaliser des gaines protectrices pour joints articulés dans lesquelles les déformations de la paroi externe provoquent un entraînement de la graisse contenue dans la gaine en direction du plus grand diamètre de cette dernière, vers la zone où se trouvent les éléments mécaniques qui ont besoin de graissage (paliers, articulations, roulements, etc).

La gaine de protection est constituée d'un élément tubulaire avec zones de fixation aux extrémités et soufflet central tronconique, les plis de ce soufflet comportant des flancs inclinés formant un angle de 0 à 45° avec l'axe de la gaine du côté de grand diamètre de la gaine et de 60 à 80° du côté du petit diamètre, de manière à ce que les déformations du soufflet provoque un refoulement de la graisse vers l'extrémité de grand diamètre.

Sur les dessins annexés, donnés à titre d'exemples non limitatifs de formes de réalisation de l'objet de l'invention:
la figure 1 est une demi-coupe axiale d'une gaine de protection pour joint de transmission,
la figure 2 représente à une échelle différente une gaine de même type montée sur un joint articulé,
la figure 3 représente, vue de côté, une gaine de protection pour crémaillère de direction,
la figure 4 est une vue agrandie du détail D2 de la figure précédente,
la figure 5 est une vue agrandie du détail D1 de la figure 2
et les figures 6 et 7 représentent dans les mêmes conditions une variante de gaine pouvant se monter sur les joints de transmission respectivement avec ou sans gorge périphérique pour nervure d'accrochage.

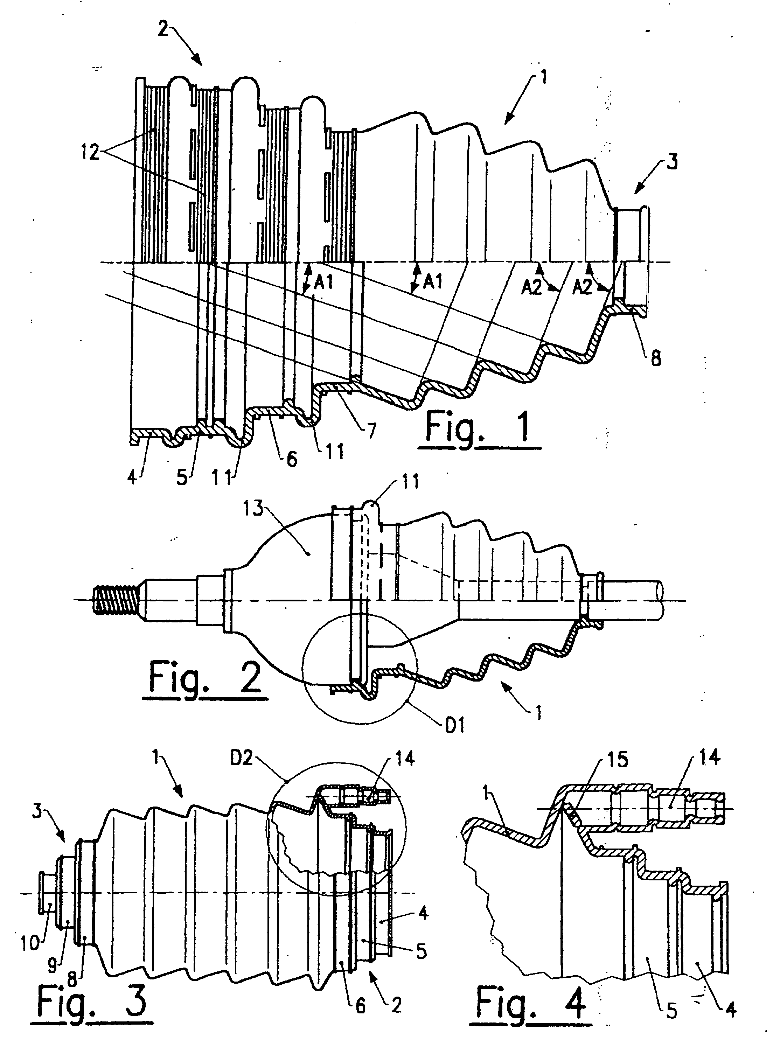

La gaine, figures 1 à 5, est constituée d'un manchon tubulaire réalisé dans un matériau souple résistant aux lubrifiants, tel que caoutchouc ou élastomère, et comportant trois parties: un soufflet 1 central tronconique déformable et extensible, et deux extrémités 2, 3 permettant de monter de manière étanche ladite gaine sur le joint articulé.

Les extrémités 2, 3 forment respectivement des zones de fixation de petit et de grand diamètre, et sont chacune composées d'un ou plusieurs éléments sensiblement cylindriques 4, 5, 6, 7 et 8, 9, 10 de diamètres internes différents pourvus de gorges externes destinées à recevoir un collier de serrage assurant l'étanchéité de l'ensemble. Ces éléments cylindriques pourront être reliés les uns aux autres par des ondulations déformables 11.

Les surfaces extérieures d'appui des colliers de serrage pourront être lisses, ou au contraire être pourvues de rainures circulaires 12 transmettant des compressions différenciées conduisant à une meilleure étanchéité.

Les plis du soufflet 1 comportent des flancs inclinés selon des angles asymétriques par rapport à l'axe longitudinal de la gaine : d'une part, du côté du grand diamètre, des angles A1 compris entre 0 et 45° et, d'autre part, du côté du petit diamètre, des angles compris entre 60 et 80° par rapport au même axe longitudinal. Lorsque le soufflet est soumis à des mouvements de rotation ou de flexions, la graisse qui, dans les soufflets connus à ce jour, tend à s'échapper de l'articulation 13 pour se diriger vers le petit diamètre de la gaine, se voit refoulée vers cette articulation. En effet, les angles ouverts A2 (60 à 80°) tendent à former une barrière mobile, alors que les angles fermés A1 (10 à 30°) favorisent le passage du lubrifiant.

Les constructeurs de véhicules équipés de directions assistées prévoient des évents compensant les différences de pression existant entre les deux gaines de protection à soufflet montées à chaque extrémité de la crémaillère de direction. Ces évents sont reliés entre eux par des tubes de diamètres et de configuration variables selon les modèles de véhicules. Dans tous les cas connus, ces tubes-évents sont raccordés aux gaines de protection ou traversent celles-ci. Les gaines adaptables disponibles actuellement sur le marché ne présentent ni orifice ni raccord pour ces tubes-évents. La difficulté réside dans la grande disparité des montages choisis par les constructeurs de véhicules, ainsi que dans la complexité du moulage d'une gaine de protection réellement adaptable.

Les gaines de protection selon la présente invention destinées aux crémaillère de direction sont équipées d'un raccord souple 14 positionné de manière à pouvoir être raccordé à la grande majorité des tubes-évents des véhicules actuellement sur le marché. L'extrémité ouverte de ce raccord comporte plusieurs sections de diamètres différents qui permettent d'y raccorder par simple serrage les différents tubes existants sur le marché. L'autre extrémité est fermée pour permettre le montage de la gaine sur les crémaillères de direction non assistées et donc démunies d'évent. Cette fermeture est obtenue par un opercule 15 intégrée au soufflet au moment du moulage. Cet opercule peut être facilement arraché ou percé par le monteur lorsque la direction est assistée et donc munie d'un tube-évent, de manière à faire communiquer ce dernier avec l'intérieur de la gaine (figures 3 et 4).

Pour être économiquement viable, l'ensemble doit être réalisé en une pièce, par simple injection ou injection-soufflage dans un outillage conventionnel à ouverture sur deux plans. Ceci est rendu possible par le positionnement et la forme du raccord souple 14 et, surtout, par la position de l'opercule 15 intégré à la paroi de la gaine.

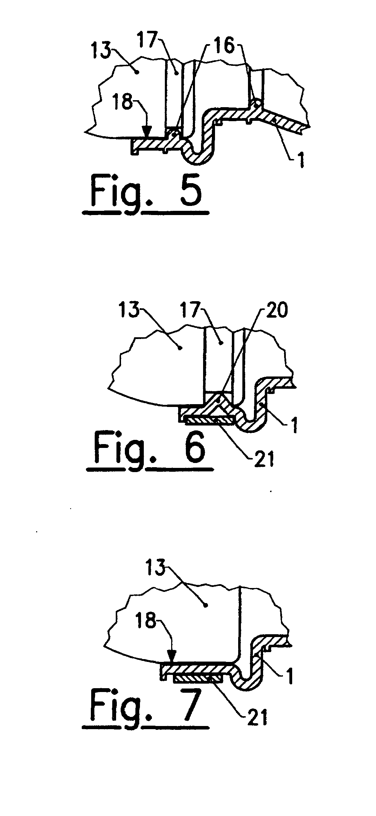

Les gaines de protection conventionnelles comme décrites par exemple dans le document US-5 645 286 comportent en général sur la surface interne des éléments cylindriques 4 à 10 de fixation, des nervures d'accrochage 16 circulaires disposées généralement au milieu de chaque surface d'appui. Ces nervures sont destinées à s'engager dans des gorges périphériques 17 prévues sur le "bol" 13 des joints articulés de transmission ou sur les carters de crémaillères de direction. Ces gorges sont très souvent situées près du bord du dispositif considéré, de telle sorte que la surface d'appui 18 de l'élément cylindrique se trouve être partiellement en porte-à-faux. Afin d'éviter un risque de déboîtement, les nervures d'accrochage 16 des gaines de protection selon l'invention sont déportées vers le soufflet 1 de manière à ce que les colliers de serrage portent sur une zone plane et ne puisse basculer (figure 5).

Certains bols 13 de joints articulés, ou carters de crémaillères, sont dépourvus de gorge périphérique 17.

Pour permettre l'adaptation de la gaine de protection selon l'invention à tous les types de bols ou carters de crémaillères, qu'ils comportent ou non une gorge périphérique 17, certaines zones de fixation 4 - 10 comporteront avantageusement une nervure d'accrochage constituée d'un pli annulaire 20 en 'V' à pointe dirigée vers l'intérieur et dont la forme est déterminée de manière à permettre à la nervure de s'ouvrir et d'être aplatie lors de la fixation du collier de serrage 21 dans le cas des éléments à surface externe lisse (figure 7).

Les cônes de montages rigides connus seront avantageusement remplacés par des dispositifs de mise en place de la gaine s'adaptant automatiquement au diamètre de chaque bol 13 de joint de transmission, ou carter de crémaillère de direction.

Le positionnement des divers éléments constitutifs donne à l'objet de l'invention un maximum d'effets utiles qui n'avaient pas été, à ce jour, obtenus par des dispositifs similaires.

## Revendications

1. Gaine souple à soufflet pour joint articulé, destinée à la protection des joints articulés lubrifiés de type cardan, homocinétiques, tripodes, à billes, à rotule ou similaires utilisés pour transmettre un mouvement à des organes mobiles, ou d'organes tels que crémaillères de direction, en particulier dans le domaine des équipements de remplacement pour véhicules automobiles, ladite gaine consistant en un élément tubulaire formé de zones de fixation aux extrémités constituées d'éléments sensiblement cylindriques (4, 5, 6, 7 et 8, 9, 10) et d'un soufflet (1) central tronconique dont les plis comportent des flancs inclinés selon des angles asymétriques par rapport à l'axe longitudinal de la gaine : d'une part, du coté du grand diamètre, des angles fermés (A1) compris entre 0 et 45° et, d'autre part, du côté du petit diamètre, des angles ouverts (A2) compris entre 60 et 80° par rapport au même axe longitudinal, de façon à ce que, lorsque le soufflet (1) est soumis à des mouvements de rotation ou de flexion, la graisse contenue dans la gaine soit refoulée vers l'articulation (13) du joint articulé se trouvant du côté de l'extrémité de grand diamètre,
**caractérisée en ce que** la surface interne des éléments cylindriques (4 à 10) de fixation comportent des nervures d'accrochage (16) circulaires déportées vers le soufflet (1), et non disposées au milieu desdites surfaces internes.

2. Gaine souple selon la revendication 1, **se caractérisant par le fait que** les surfaces extérieures des éléments cylindriques (4 à 10) de fixation destinées à recevoir des colliers de serrage sont pourvues de rainures circulaires (12) déterminées pour transmettre des compressions différenciées aptes à améliorer l'étanchéité.

3. Gaine souple selon l'une quelconque des revendications précédentes, **se caractérisant par le fait que** certains éléments cylindriques (4 à 10) comportent une nervure d'accrochage constituée d'un pli annulaire (20) en 'V à pointe dirigée vers l'intérieur et dont la forme est déterminée de manière à permettre à la nervure de s'ouvrir et d'être aplatie dans le cas d'éléments d'appui à surface externe lisse.

4. Gaine souple selon l'une quelconque des revendications précédentes, destinées aux crémaillère de direction et comportant un raccord souple (14) s'adaptant, grâce à une extrémité ouverte pourvue de plusieurs sections de diamètres différents, sur les tubes-évents destinés à compenser les différences de pression existant entre les deux gaines de protection à soufflet montées à chaque extrémité de la crémaillère des véhicules équipés de direction assistée,
**se caractérisant par le fait que** l'extrémité du raccord souple (14) situé du côté de la gaine est fermée au moyen d'un opercule (15) intégré à la paroi de la gaine au moulage et agencé pour pouvoir être facilement arraché ou percé par le monteur lorsque la direction est assistée, de manière à permettre le montage de la gaine sur les crémaillères de direction assistées.

5. Gaine souple selon l'une quelconque des revendications précédentes, **se caractérisant par le fait que** les plis du soufflet (1) comportent des flancs inclinés selon des angles (A1, A2) asymétriques par rapport à l'axe longitudinal de la gaine, lesdits angles étant déterminés de façon à ce que, lorsque le soufflet (1) est soumis à des mouvements de rotation ou de flexion, la graisse contenue dans la gaine soit refoulée vers l'articulation (13) du joint articulé se trouvant du côté de l'extrémité de grand diamètre.

## Patentansprüche

1. Flexibler Schutzschlauch mit Faltenbalg für Gelenkverbindungen zum Schutz geschmierter Gelenkverbindungen der Art von Kardangelenken, Gleichlaufgelenken, Dreibeingelenken tripode$ Kugelgelenken, Gelenkkupplungen und ähnlichem, mit denen eine Bewegung an bewegliche Organe, wie zum Beispiel Zahnstangen für Lenkgetriebe, übertragen wird, insbesondere für den Bereich Ersatzteilversorgung für den Automobilbau, wobei der genannte Schutzschlauch aus einem schlauchförmigen Element besteht, das an den Enden im wesentlichen zylindrische (4, 5, 6, 7 und 8, 9, 10) Befestigungsbereiche und in der Mitte einen Faltenbalg (1) in Form eines Kegelstumpfes besitzt, mit Falten, deren Flanken asymmetrisch zur Längsachse des Schutzschiauchs angeordnet sind und mit dieser auf der Seite des großen Durchmessers spitze Winkel (A1) zwischen 0° und 45° und auf der Seite des kleinen Durchmessers offene Winkel (A2) zwischen 60° und 80° bilden, so dass das im Schutzschlauch enthaltene Fett bei einer Drehung oder Biegung des Faltenbalgs (1) zu dem auf der Seite des großen Durchmessers liegenden Gelenk (13) hin gedrängt wird,
**gekennzeichnet dadurch, dass** die innere Oberfläche des zylindrischen Befestigungselements (4 bis 10) einhängbare, kreisförmige Rippen (16) aufweist, die zum Faltenbalg (1) verlagert und nicht in der Mitte der genannten inneren Oberflächen angeordnet sind.

2. Flexibler Schutzschlauch gemäß Anspruch 1, **gekennzeichnet dadurch, dass** die äußeren Oberflächen der zylindrischen Befestigungselemente (4 bis 10), die zur Montage der Schlauchschellen bestimmt sind, kreisförmige Nuten (12) aufweisen, die dazu bestimmt sind, unterschiedliche Druckkräfte zu übertragen, um die Dichtigkeit zu verbessern.

3. Flexibler Schutzschlauch gemäß einem der vorstehenden Ansprüche, **gekennzeichnet dadurch, dass** bestimmte zylindrische Elemente (4 bis 10) eine Rippe zum Einhängen besitzen, die aus einer ringförmigen Falte (20) in Form eines mit der Spitze nach unten gerichteten V bestehen, wobei die Form so gewählt wurde, dass die Rippe sich öffnen und flachgedrückt werden kann, wenn Anpresselemente mit glatter Außenfläche vorhanden sind.

4. Flexibler Schutzschlauch gemäß einem der vorstehenden Ansprüche für Zahnstangen von Lenkgetrieben, mit einem flexiblen Anschlusselement (14), das sich dank seines offenen Endes, das mehrere Zonen mit unterschiedlichen Durchmessern aufweist, auf Entlüftungsleitungen aufstecken lässt, durch welche die Druckunterschiede zwischen den beiden Faltenbalg-Schutzschläuchen an jedem Ende der Zahnstange der mit einer Servolenkung ausgerüsteten Fahrzeuge ausgeglichen werden können,
**gekennzeichnet dadurch, dass** das Ende des flexiblen Anschlusselements (14) auf Seite des Schutzschlauchs mit einem Deckel (15) versehen ist, der bei der Herstellung in die Wandung des Schutzschlauchs eingelassen wurde und so angeordnet ist, dass er vom Mechaniker leicht abgezogen oder durchstoßen werden kann, wenn es sich um eine Servolenkung handelt, so dass der Schutzschlauch auf die Zahnstangen von Servolenkungen montiert werden kann.

5. Flexibler Schutzschlauch gemäß einem der vorstehenden Ansprüche, **gekennzeichnet dadurch, dass** die Falten des Faltenbalgs (1) Flanken besitzen, die mit der Längsachse des Schutzschlauchs asymmetrische Winkel (A1, A2) bilden, wobei die Winkel so gewählt werden, dass das Fett bei einer Drehung oder Biegung des Faltenbalgs (1) in Richtung des Gelenks (13) der Gelenkverbindung auf der Seite des großen Durchmessers gedrängt wird.

## Claims

1. Flexible bellows-type sleeve for articulated coupling, designed to protect iubricated articulated coupling of universai, homokinetic, tripod, ball, or similar type used to transmit movement to moving parts, or parts such as steering racks, especially on replacement equipment for motor vehicles, the aforementioned sleeve consisting of a tubular element formed of fixing zones at the ends made up of roughly cylindrical sections (4, 5, 6, 7 and 8, 9, 10) and central truncated-cone shaped bellows (1), the folds of which have sides inclined at asymmetrical angles relative to the longitudinal axis of the sleeve: on the one hand, narrow angles (A1) between 0° and 45° on the large diameter side, and on the other, wide angles (A2) between 60 and 80° relative to the same longitudinal axis, on the small diameter side, so that, when bellows (1) bend or rotate, the grease contained in the sleeve is driven back towards the joint (13) of the articulated coupling on the large diameter end side,
**characterized in that** the inner surface of cylindrical fixing elements (4 to 10) with circular ribs (16) are off-set towards bellows (1), and not arranged in the middle of the aforesaid internal surfaces.

2. Flexible sleeve according to claim 1, **characterized in that** the external surfaces of the cylindrical fixing sections (4 to 10) designed to receive clamping collars have circular grooves (12) sized to transmit different compressions in order to improve tightness.

3. Flexible sleeve according to any one of the above claims, **characterized in that** certain of the cylindrical sections (4 to 10) include a rib consisting of an annular fold (20) in 'V' form with the point directing inwards, and shaped so as to allow the rib to open and be flattened when using external smooth-faced support elements.

4. Flexible sleeve according to any of the above claims, intended for use on steering racks and comprising a flexible connector (14) adapting, by an open end equipped with several sections of different diameters, to the vent tubes designed to compensate for the pressure differences between the two bellows-type protective sleeves installed at each end of the steering rack of vehicles with power-assisted steering,
**characterized in that** the end of the flexible connector (14) located on the sleeve side is closed by means of a disk (15) incorporated in the wall of the sleeve on casting and arranged so as to be able easily removed or bored by the fitter when the steering is power-assisted, so that the sleeve can be fitted on the power-assisted steering racks.

5. Fiexible sleeve according to any of the above claims, **characterized in that** the folds (1) of the bellows have sides inclined at angles (A1, A2) asymmetrical to the longitudinal axis of the sleeve, the aforementioned angles determined so that, when bellows (1) are subjected to bending or rotational movements, the grease contained in the sleeve is returned back towards the joint (13) of the articulated coupling on the large diameter end side.
